# EUROPÄISCHE PATENTSCHRIFT

(11) **EP 1 177 147 B1**
(45) Veröffentlichungstag und Bekanntmachung des Hinweises auf die Patenterteilung: **31.03.2004**
(21) Anmeldenummer: 00931127.5
(22) Anmeldetag: 05.05.2000
(51) Int. Cl.: B65G 54/02

(54) **TRANSPORTSYSTEM**
TRANSPORT SYSTEM
SYSTEME DE TRANSPORT

(30) Priorität: 06.05.1999 DE 29908094 U
(43) Veröffentlichungstag der Anmeldung: 06.02.2002
(73) Patentinhaber: Cooper Power Tools GmbH & Co., 73461 Westhausen (DE)
(72) Erfinder: MAYER, Otto, D-73466 Lauchheim (DE); WOHLFAHRTH, Klaus, D-74589 Satteldorf (DE)
(74) Vertreter: Grünecker, Kinkeldey, Stockmair & Schwanhäusser Anwaltssozietät
(86) Internationale Anmeldenummer: PCT/EP2000/004066
(87) Internationale Veröffentlichungsnummer: WO 2000/068125

(56) Entgegenhaltungen:
- EP-A- 0 400 663
- EP-A- 0 820 862
- JP-A- 60 132 829
- US-A- 4 922 830

## Beschreibung

Die Erfindung betrifft ein Transportsystem mit zumindest einem entlang einer Laufbahn mittels einer Primärteil und Sekundärteil umfassenden Linearmotorantriebseinrichtung bewegbaren Produktträger.

Ein solches Transportsystem ist aus der DE 4413625A1 bekannt. Bei diesem vorbekannten Transportsystem bewegt sich eine Schlitteneinrichtung als Produktträger mittels der Linearmotorantriebseinrichtung entlang einer ersten Laufbahn und ist insgesamt mit dieser entlang einer zweiten Laufbahn verstellbar. An der ersten Laufbahn ist ein Stator oder Primärteil der Linearmotorantriebseinrichtung angeordnet. Ein entsprechender Läufer oder Sekundärteil ist an der Schlitteneinrichtung befestigt. An der Schlitteneinrichtung ist eine senkrecht verschiebbare Tragsäule gelagert, an deren unterem Ende ein Produkt- oder Werkstückträger in Form einer Greifeinrichtung angeordnet ist.

Das vorbekannte Transportsystem dient zum Aufnehmen und Ablegen eines bestimmten Produktes oder Werkstückes mittels der Greifeinrichtung. Die Schlitteneinrichtung ist begrenzt entlang der ersten Laufbahn zwischen zwei festen Punkten bewegbar und die Schlitteneinrichtung insgesamt mit der ersten Laufbahn entlang der zweiten Laufbahn zwischen zwei weiteren Punkten bewegbar, so dass insgesamt das von der Greifeinrichtung gehaltene Gut entlang aller drei Koordinatenachsen entlang von räumlichen Bahnkurven bewegt werden kann.

Nachteilig bei dem vorbekannten Transportsystem ist, dass nur spezielle Waren, Güter, Werkstücke oder Produkte aufgrund der Greifeinrichtung transportiert werden können und nur ein Produktträger durch äußere Beeinflussung über das Primärteil der Linearmotorantriebseinrichtung bewegt werden kann.

Aus der JP 60-13 28 29 ist ein Transportsystem mit einem Bewegungsteil bekannt, wobei dieses entlang einer Laufbahn mittels einer Linearmotorantriebseinrichtung bewegbar ist.

Die US-A-4922830 offenbart eine Einschienenhängebahn mit drei Stromschienen und zwei Datenschienen jeweils zur separaten Energie- und Datenübertragung.

Dem Anmeldungsgegenstand liegt daher die Aufgabe zugrunde, das eingangs beschriebene Transportsystem dahingehend zu verbessern, dass im wesentlichen eine beliebige Anzahl von Produktträgern unabhängig voneinander entlang der Laufbahn bewegt werden können und vielseitig zum Transport unterschiedlichster Produkte oder Werkstücke eingesetzt werden können.

Diese Aufgabe wird durch die Merkmale des Anspruchs 1 gelöst.

Ein ähnlich aufgebautes Transportsystem wird in der DE29816285 desselben Anmelders beschrieben, wobei bei diesem Transportsystem das Sekundärteil am Produktträger und das Primärteil an der Laufbahn angeordnet ist.

Gegenüber dem letztgenannten Stand der Technik ergibt sich ähnlich wie im Hinblick auf den erstgenannten Stand der Technik, dass erfindungsgemäß der Linearmotor umgekehrt eingesetzt wird, so dass jeder Produktträger individuell und unabhängig von anderen steuerbar ist. Dadurch kann jeder Produktträger separat beschleunigt oder verzögert werden, so dass beispielsweise bei Staustrecken eine Pufferung der Produktträger untereinander nicht notwendig ist. Es ergibt sich eine individuelle und konfliktfreie Steuerung der verschiedenen Produktträger und auf Stopper und/oder Stoßdämpfer an den Produktträgem kann verzichtet werden. Darüber hinaus sind weniger Produktträger notwendig, da nur so viele benötigt werden, wie Arbeitsaufträge entlang der Laufbahn und der dort befindlichen Arbeitsstationen ausgeführt werden müssen. Im Vergleich zu dem Transportsystem nach DE 298 16 285 kann von einer Reduktion der Anzahl der für eine Fertigung benötigten Produktträger auf die Hälfte ausgegangen werden.

Durch die separate Steuerung der verschiedenen Produktträger können diese besser beschleunigt und verzögert werden, wodurch sich eine Verkürzung der Ein-/Auslauf-Taktzeiten ergibt und Produktionsstillstandszeiten durch variable Geschwindigkeiten der Produktträger aufgeholt werden können.

Aufgrund der individuellen Steuerung eines jeden Produktträgers sind diese vor einem Aufpuffem, d.h. vor einem Zusammenstoß mit anderen Produktträgem gesichert, so dass keine Quetsch- und Scherstellen am Produktträger auftreten. Diese könnten sich ansonsten durch den Zusammenstoß zweier hintereinander angeordneter Produktträger oder durch Verklemmen eines Produktträgers in seiner Laufbahn durch Aufpuffern beispielsweise eines nachfolgenden Produktträgers ergeben.

Bei einem einfachen Ausführungsbeispiel des erfindungsgemäßen Transportsystems kann das Primärteil an der Grundplatte, insbesondere an deren Unterseite, angeordnet sein. Dadurch kann ein solches Primärteil in einfacher Weise angeordnet werden und ist gut für Wartungsarbeiten oder dergleichen zugänglich. Außerdem kann das Sekundärteil direkt gegenüberliegend zum Primärteil an der Laufbahn angeordnet sein, wobei nur ein geringer Spalt zwischen beiden verbleibt.

Bei einem Produktträger mit Grundplatte einer ausreichenden Höhe kann das Primärteil außerdem in der Grundplatte zumindest teilweise versenkt angeordnet sein. Ist die Höhe der Grundplatte dafür ausreichend, kann der Primärteil auch vollständig in der Grundplatte versenkt sein und flächenbündig zur Unterseite der Grundplatte enden. Auf diese Weise ist der Produktträger bei beispielsweise ebenfalls versenkt angeordnetem Sekundärteil sehr nah zu den Laufbahnen anordbar, so dass insgesamt die Bauhöhe des Transportsystems herabsetzbar ist. Außerdem sind auf diese Weise Primär- und Sekundärteil vor Beschädigungen weitgehend gesichert.

Die Linearmotorantriebseinrichtung kann als A- oder Synchronmotor ausgebildet sein. Bevorzugt wird ein Asynchronmotor eingesetzt.

Da das Primärteil dem Produktträger bzw. der Grundplatte zugeordnet ist, muss eine entsprechende Spannungs- bzw. Stromversorgung vorhanden sein. Die Spannungsversorgungseinrichtung verläuft entlang der Laufbahn und ist insbesondere an dieser angeordnet und der Produktträger ist über eine Schleifkontakteinrichtung mit der Spannungsversorgungseinrichtung in Kontakt. Solche Spannungs- bzw. Stromversorgungen für bewegte Gegenstände sind vielfach realisierbar und unterschiedlichste Arten der Realisierung sind aus der Praxis bekannt. Bei dem erfindungsgemäßen Transportsystem ist die Spannungsversorgungseinrichtung als Spannungs- bzw. Stromschiene ausgebildet sein, entlang der ein vom Produktträger vorstehender Schleifkontakt bewegbar ist.

Die Laufbahn des erfindungsgemäßen Transportsystems kann in unterschiedlicher Weise realisiert werden. In der DE 298 16 285 desselben Anmelders werden beispielsweise horizontal und vertikal angeordnete Laufbahnen beschrieben mit entsprechenden Führungen für die Produktträger. Die Grundplatten sind entsprechend horizontal bzw. vertikal ausgerichtet. Auch bei dem erfindungsgemäßen Transportsystem sind solche horizontalen und vertikalen Anordnungen mit der entsprechenden Halterung und Führung nach DE 298 16 285 einsetzbar.

Bei dem beschriebenen Ausführungsbeispiel des erfindungsgemäßen Transportsystems sind die Laufbahnen durch ein von einer Vielzahl von im wesentlichen vertikal auf einem Untergrund aufgestellten Tragprofilen in Abstand zueinander gehaltenes Laufschienen-Paar gebildet. Statt der Tragprofile können auch Ständer in ähnlicher Weise und von ähnlichem Aufbau wie in der DE 298 16 285 beschrieben verwendet werden.

Um den Freiraum zwischen den Tragprofilen zu überbrücken, kann ein Abdeckprofil zwischen ihnen angeordnet sein. Dies kann sich entlang der Laufbahnen im gesamten Transportsystem erstrecken.

Da das Abdeckprofil im wesentlichen der Unterseite der Grundplatte bzw. des Produktträgers zuweist, kann das oder können die Sekundärteile am Abdeckprofil entlang der Laufbahn angeordnet sein. Als Sekundärteile werden bei Synchronmotoren Magnete und insbesondere Profil-Magnete eingesetzt, die analog zum Primärteil auf dem Abdeckprofil oder zumindest teilweise versenkt in diesem angeordnet sein können, und bei Asynchronmotoren vorzugsweise Kupferschienen mit Stahlrücken.

Um den Produktträger entlang der Laufbahn sicher bewegen zu können, kann die Grundplatte entlang ihrer Längskanten und/oder auf ihrer Unterseite benachbart zu ihren Längskanten entlang der Laufbahn geführt sein.

Für eine solche Führung sind verschiedene Realisierungen möglich. Beispielsweise können zwischen Grundplatte und Laufbahn Roll-, Kugel-, Führungselemente, reibungsvermindernde Führungseinrichtungen oder dergleichen angeordnet sein. Diese Elemente bzw. Einrichtungen können beabstandet zueinander oder auch kontinuierlich im Fall von schienenförmigen Führungselementen oder -einrichtungen angeordnet. Die entsprechenden Elemente bzw. Einrichtungen können an der Laufbahn beziehungsweise den Laufschienen und/oder an der Grundplatte vorgesehen sein.

Da die Produktträger gemäß erfindungsgemäßem Transportsystem individuell steuerbar sind, ist eine Positionsüberwachung vorteilhaft. Diese ist dadurch realisierbar, dass zwischen Produktträger und Laufbahn eine Positionsbestimmungseinrichtung angeordnet ist. Diese kann durch beispielsweise einen Maßstab und ein Maßstabablesesystem gebildet sein. Der Maßstab kann am Produktträger oder am Abdeckprofil oder an den Laufbahnen und entsprechend das Maßstabablesesystem am jeweils anderen Teil angeordnet sein. Bevorzugt ist das Maßstabablesesystem am bewegten Produktträger angeordnet, um durch den Produktträger selbst seine jeweilige Position feststellen zu können.

Durch die genaue Positionsbestimmung für jeden Produktträger entfällt beispielsweise auch eine Indexiereinrichtung an jeder Arbeitsstation entlang der Laufbahn, da jeder Produktträger relativ zum Maßstab genau positioniert werden kann. Der Produktträger weist erfindungsgemäß eine bordeigene Elektronik auf, die über die Spannungs- bzw. Stromschiene als Spannungsversorgungseinrichtung mit einer Zentralstation zum Austausch von Daten und/oder Anweisungen in Verbindung steht. Auf diese Weise wird nicht nur Energie über die Spannungsversorgungseinrichtung auf den Produktträger übertragen, sondern auch Informationen werden zwischen diesem und der Zentralstation ausgetauscht. Diese Informationen können beispielsweise zur Positionsbestimmung der einzelnen Produktträger, zu deren Beschleunigung oder Verzögerung, zu deren Identifizierung, zur elektrischen Kodierung eines Arbeitsauftrags oder dergleichen übermittelt werden. Weiterhin können die Informationen mittels eines Bussystems zwischen Produktträger und beispielsweise Abdeckprofil übertragen werden. In vorteilhafter Weise ist ein solches Bussystem in der Lichtwellenleitertechnik ausgeführt.

Um auch direkt an den Arbeitsstationen oder während der Bewegung der Produktträger Informationen von diesen entnehmen zu können oder Informationen einzugeben, kann der Produktträger eine Anzeige- und/oder Abfrage- und/oder Eingabeeinrichtung aufweisen. Auf diese Weise sind beispielsweise über die Anzeigeeinrichtung Informationen direkt am Produktträger anzeigbar. Ebenso kann über eine Eingabeeinrichtung eine Fahrfreigabe des Produktträgers eingegeben werden, die an die Zentralstation übermittelbar ist. Direkt nach der Fahrfreigabe kann der Produktträger weiter bewegt werden, wodurch sich insgesamt eine absolut freie Bandaustaktung für das gesamte Transportsystem ergibt.

Über die Anzeigeeinrichtung können auch Informationen für die Arbeiter an die verschiedenen Arbeitsstationen übermittelt werden oder weitere Informationen können über eine entsprechende Abfrageeinrichtung über den Produktträger von der Zentralstation abgerufen werden.

Insbesondere bei einem Transportsystem, bei dem die Grundplatte für eine längere Zeit einer Arbeitsstation zugeordnet werden muss, ist es von Vorteil, wenn im wesentlichen nur die Grundplatte an dieser Arbeitsstation zurückgelassen wird, während die der Grundplatte zugeordnete Antriebseinrichtung des Produktträgers beispielsweise für weitere Grundplatten eingesetzt wird. Dies kann dadurch realisiert werden, dass das Primärteil an einem mit der Grundplatte koppelbaren Fahrzeug angeordnet ist. Je nach Bedarf wird dieses Fahrzeug mit der Grundplatte gekoppelt oder von dieser entkoppelt. Mit einem Fahrzeug können mehrere Grundplatten bewegt werden, so dass insgesamt die Kosten des erfindungsgemäßen Transportsystems geringer werden. In diesem Zusammenhang erweist es sich weiterhin als Vorteil, wenn jedem Produktträger bzw. dessen Grundplatte eine Identifizierung zuordbar ist, so dass mittels eines beliebigen Fahrzeugs die entsprechende Grundplatte zum Gebrauch oder nach Gebrauch forttransportiert werden kann. Es ist ebenfalls möglich, dass bestimmte Abschnitte des Transportsystems mit nur einem Fahrzeug betrieben werden, das alle entlang dieses Transportabschnitts bewegbaren Grundplatten

Um nicht nur die Position der Grundplatte zu kennen, ist es in diesem Zusammenhang als günstig zu betrachten, wenn eine entsprechende Positionsbestimmungseinrichtung sowohl der Grundplatte als auch dem Fahrzeug zugeordnet ist

In das Fahrzeug unabhängig von der Grundplatte und diese gegebenenfalls auch unabhängig vom jeweiligen Fahrzeug bewegen zu können, kann das Fahrzeug entlang einer separaten, insbesondere unterhalb der Grundplatte verlaufenden Fahrzeuglaufbahn bewegbar sein.

Im einfachsten Fall kann diese Fahrzeuglaufbahn am Abdeckprofil ausgebildet sein.

Da das Fahrzeug entlang der Fahrzeuglaufbahn auch ohne angekoppelte Grundplatte bewegbar sein soll, kann die oder eine weitere Spannungsversorgungseinrichtung entlang der Fahrzeuglaufbahn am Abdeckprofil angeordnet sein.

Bei einem Ausführungsbeispiel des erfindungsgemäßen Transportsystems kann die Fahrzeuglaufbahn in einer im wesentlichen U-förmigen, nach oben in Richtung Grundplatte offenen Laufbahnvertiefung im Abdeckprofil ausgebildet ist. In dieser Vertiefung läuft das Fahrzeug unbehindert und unabhängig von den Grundplatten.

Eine einfache Kopplungsmöglichkeit zwischen Fahrzeug und Grundplatte kann beispielsweise dadurch realisiert werden, dass zwischen Fahrzeug und Grundplatte eine lösbare Kopplungseinrichtung angeordnet ist. Diese kann beispielsweise einem Hubmagneten aufweisen, der beim Ankoppeln der Grundplatte vom Fahrzeug nach oben in eine entsprechende Öffnung in der Unterseite der Grundplatte einschiebbar ist. Zum Entkoppeln wird der Hubmagnet zurückgezogen.

Weitere Kopplungseinrichtungen sind aus der Praxis bekannt und können auch entsprechend bei dem erfindungsgemäßen Transportsystem eingesetzt werden. Es ist auch möglich, beispielsweise Fahrzeug und Grundplatte manuell zu entkoppeln, falls die Grundplatte eine gewünschte Position erreicht hat. Dabei kann die Anordnung des Produktträgers in der erwünschten Position beispielsweise über die Eingabeeinrichtung zur Feinpositionierung erfolgen und anschließend mittels dieser Einrichtung auch die Entkopplung vom Fahrzeug erfolgen. Es ist ebenfalls möglich, dass bei Erreichen einer gewünschten Zielposition die Grundplatte automatisch durch einen mechanischen Anschlag oder dergleichen vom Fahrzeug entkoppelt wird.

Um ein Eingreifen in den Bewegungsweg des Fahrzeugs für Arbeiter entlang des Transportsystems möglichst zu verhindern und damit eine Verletzungsgefahr zu vermindern, kann die Laufbahnvertiefung durch eine Abdeckung abgedeckt sein, in der ein sich in Bewegungsrichtung des Fahrzeugs erstreckender Schlitz zum Durchgriff der Kopplungseinrichtung ausgebildet ist. Durch diesen relativ schmalen Schlitz wird auch verhindert, dass Teile auf die Fahrzeuglaufbahn fallen und dadurch eine weitere Bewegung des Fahrzeugs verhindern oder dieses gar beschädigen.

Um bei dem erfindungsgemäßen Transportsystem die auf dem Produktträger aufgeladenen Produkte entsprechend zur Verwendung ausrichten zu können, kann ein verstellbarer Drehteller auf der Grundplatte drehbar gelagert sein. Der Drehteller kann nur einen Teil der Grundplatte abdecken, kann aber auch genauso groß oder sogar größer in seinen Abmessungen als die Grundplatte sein.

Um den Drehteller relativ zur Grundplatte einfach verdrehen zu können, kann eine Lineardrehantriebseinrichtung zwischen Drehteller und Grundplatte ausgebildet sein. Diese kann wie die Antriebseinrichtung für Fahrzeug bzw. Produktträger ebenfalls über die obenbeschriebene Spannungsversorgungseinrichtung versorgt werden.

Um eine Weiterbewegung insbesondere der vom Fahrzeug entkoppelten Grundplatten zu verhindern, kann an den Laufbahnen, an der Abdeckeinrichtung oder an den Grundplatten eine Bremseinrichtung angeordnet sein. Diese dient insbesondere zur Festlegung der Grundplatte im Bereich von Arbeitsstationen entlang der Laufbahn. Die Bremseinrichtung kann wiederum manuell oder automatisch betätigt werden.

Da das Fahrzeug in beide Richtungen entlang der Laufbahnen bewegbar ist, kann es sich insbesondere bei mehreren Fahrzeugen entlang eines Transportabschnitts als vorteilhaft erweisen, wenn die Fahrzeuglaufbahn wenigstens einen Rückführabschnitt zur Rückführung der von der Grundplatte entkoppelten Fahrzeugen an eine Rückführungsstelle aufweist. Auf diese Weise kann ein Fahrzeug an einem anderen Fahrzeug ohne Behinderung vorbeigeführt werden.

Bei dem erfindungsgemäßen Transportsystem ergibt sich durch die separate Ansteuerung der verschiedenen Produktträger, dass diese besser beschleunigt und verzögert werden können, wodurch sich die Taktzeit pro Arbeitsstation verringert. Die Produktträger können auch rückwärtsfahren, um z.B. einen Arbeitsauftrag bei mangelnder Ausführung zu wiederholen. Weiterhin können entlang einer Fertigungsstraße verschiedene, teilweise parallele Fertigungs- bzw. Transportwege konzipiert werden. Es ist eine nahezu beliebige Linienführung ohne Eck-Drehstationen zur Änderung der Bewegungsrichtung der Produktträger möglich. Schließlich sei noch angemerkt, dass bei dem erfindungsgemäßen Transportsystem eine einfache Höhenanpassung möglich ist, so dass bei der Fertigung auch Berg- und Talfahrten möglich sind.

Bei einem weiteren Ausführungsbeispiel des erfindungsgemäßen Transportsystems ist es möglich, auf dem Werkstück- beziehungsweise Produktträger einen Drehteller anzuordnen, der relativ zum Träger drehbar und/oder verschiebbar ist. Weiterhin können auf diesem Dreh-Nerschiebeteller noch Einrichtungen zum Greifen und Einspannen des entsprechenden Werkstücks, beziehungsweise Produkts oder auch eine entsprechende Aufnahme für das Produkt angeordnet sein.

Bei dem erfindungsgemäßen Transportsystem ist es möglich, dass mit nur einem Träger eine Verkettung mehrerer Montage-/Bearbeitungsstationen entlang einer Fertigungslinie erfolgt und Positionen des Werkstücks oder Produkts insbesondere während des Transportes über die entsprechende Dreh-Nerschiebeeinheit verändert werden können.

In bezug auf die DE298 16 285 desselben Anmelders sei darauf hingewiesen, dass das vorangehend beschriebene Fahrzeug mit Kopplungseinrichtung für eine Grundplatte auch in der dort beschriebenen Weise, d.h. mit Sekundärteil am Fahrzeug und Primärteil an der Laufbahn oder dergleichen aufgebaut sein könnte. In diesem Fall ergeben sich allerdings nicht die obenbeschriebenen Vorteile für das Primärteil am bewegten Gegenstand des Transportsystems.

Im folgenden werden vorteilhafte Ausführungsbeispiele der Erfindung anhand der in der Zeichnung beigefügten Figuren näher erläutert.

Es zeigen:
- Fig. 1: einen Schnitt entlang der Linie I-I durch ein erfindungsgemäßes Transportsystem nach Fig. 3;
- Fig. 2: einen Fig. 1 entsprechenden Schnitt durch ein zweites Ausführungsbeispiel, und
- Fig. 3: eine Draufsicht auf einen Transportabschnitt eines prinzipiell dargestellten, erfindungsgemäßen Transportsystems.

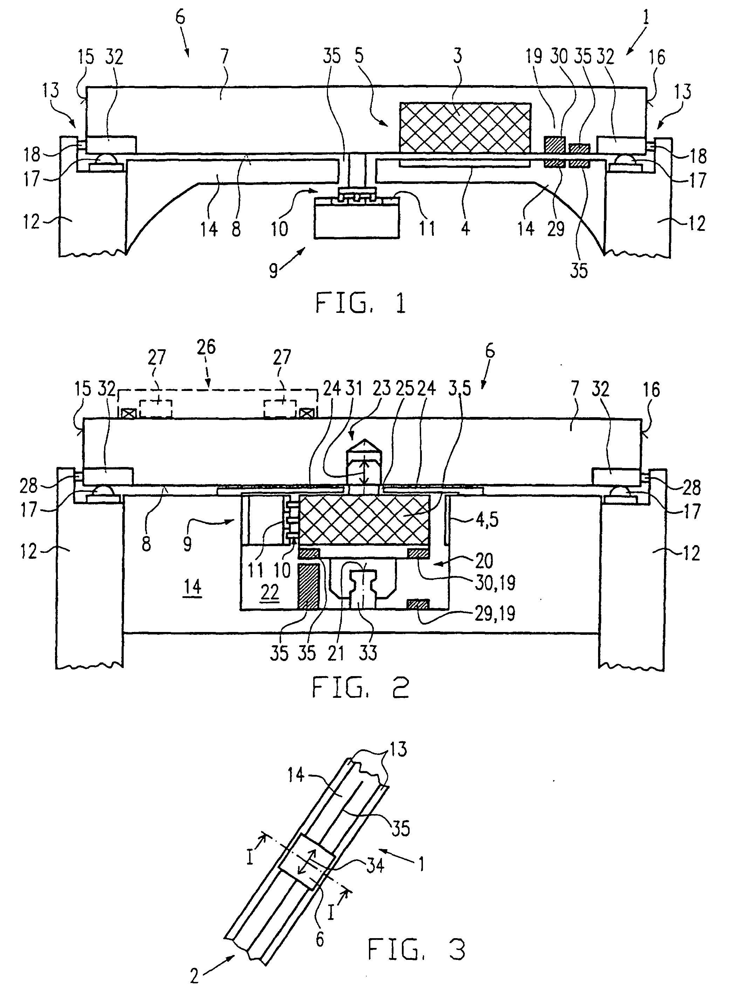

In Fig. 3 ist erkennbar, dass das Transportsystem 1 eine Laufbahn 2 aufweist, die sich beispielsweise entlang einer Fertigungsstraße zum Transport von Werkstücken, Produkten oder anderen Gegenständen mittels eines Produktträgers 6 erstreckt. Der Produktträger 6 weist eine im wesentlichen ebene Oberfläche auf, auf die der entsprechende Gegenstand aufstellbar und in Richtungen 34 entlang der Laufbahn 2 transportierbar ist. Der Produktträger 6 ist entlang seiner Längsseiten durch die Laufbahn 2 bestimmende Laufschienen 13 geführt, zwischen denen sich ein Abdeckprofil 14 erstreckt.

In Fig. 1 ist ein Schnitt entlang der Linie I-I aus Fig. 3 dargestellt. In dieser wie in der folgenden Figur sind gleiche Teile durch gleiche Bezugszeichen bezeichnet und werden nur jeweils teilweise erwähnt.

Der Produktträger 6 ist im wesentlichen durch eine Grundplatte 7 gebildet, die horizontale Ober- und Unterseiten aufweist. Auf der Oberseite der Grundplatte 7 kann ein Produkt, Werkstück oder sonstiger Gegenstand aufgestellt werden.

Entlang von Seitenkanten 15, 16 der Grundplatte 7 und in Bereichen der Unterseite 8 benachbart zu den Seitenkanten ist die Grundplatte 7 durch Roll- und Führungselemente 17, 18 entlang der Laufschienen 13 geführt. Diese weisen einen im wesentlichen L-förmigen Querschnitt auf, wobei jedem L-Schenkel ein Roll- bzw. Führungselement 17, 18 zugeordnet ist. Im Bereich der Seitenkanten 15, 16 bzw. Unterseite 8 weist die Grundplatte 7 Laufleisten 32 auf, an denen die entsprechenden Elemente 17, 18 anliegen.

In der Grundplatte 7 ist als Teil einer Linearmotorantriebseinrichtung 5 ein Primärteil 3 angeordnet. Diesem liegt ein in einem zwischen im wesentlichen vertikalen Tragprofilen 12 sich erstreckenden Abdeckprofil 14 angeordnetes Sekundärteil 4 der Linearmotorantriebseinrichtung 5 gegenüber. Das Sekundärteil 4 ist beispielsweise durch Profil-Magnete bei Synchronmotoren und durch Kupferschienen mit Stahlplatten bei Asynchronmotoren entlang der Laufbahn 2, siehe Fig. 3, gebildet.

Zur Stromversorgung des Primärteils 3 steht in etwa mittig von der Unterseite 8 der Grundplatte 7 eine Schleifkontakteinrichtung 10 vor. Diese greift in Spannungs-/Stromschienen 11 einer Spannungsversorgungseinrichtung 9 ein. Die Schleifkontakteinrichtung 10 ist durch einen Schlitz 35 in dem Abdeckprofil 14 in Richtung Spannungsversorgungseinrichtung 9 hindurchgeführt.

Zur Positionsbestimmung des Produktträgers 6 ist eine Positionsbestimmungseinrichtung 19 vorgesehen, die eine Maßstabseinrichtung 29 und eine Maßstabsableseeinrichtung 30 aufweist. Die Maßstabseinrichtung 29 ist auf einer der Unterseite 8 der Grundplatte 7 gegenüberliegenden Oberseite des Abdeckprofils 14 angeordnet und verläuft parallel zu den Laufschienen 13. An der Unterseite 8 der Grundplatte 7 ist die Maßstabableseeinrichtung 30 gegenüberliegend zur Maßstabseinrichtung 29 angeordnet. Neben der Positionsbestimmungseinrichtung 19 ist ein Bussystem aus Busleitungen 35 angeordnet, die beispielsweise in Lichtwellenleitertechnik ausgeführt sind.

In Fig. 2 ist ein Schnitt analog zu Fig. 1 durch ein zweites Ausführungsbeispiel dargestellt.

Dieses unterscheidet sich vom ersten Ausführungsbeispiel durch ein mit der Grundplatte 7 koppelbares Fahrzeug 20. Weiterhin ist in Fig. 2 auf der Oberseite der Grundplatte 7 ein Drehteller 26 gestrichelt dargestellt, der relativ zur Grundplatte 7 auf dieser drehbar gelagert ist. Als Drehantrieb weist der Drehteller 26 eine Lineardrehantriebseinrichtung 27 auf.

In dem Abdeckprofil 14 ist eine U-förmige Laufbahnvertiefung 22 zur Aufnahme des Fahrzeugs 20 angeordnet. In dieser ist das Fahrzeug 20 nahezu vollständig aufgenommen. Auf einer der Grundplatte 7 gegenüberliegenden Unterseite des Fahrzeugs ist dieses entlang einer Schiene 33 mit Fahrzeuglaufbahn 21 bewegbar. Das Primärteil 3 als Teil der Linearmotorantriebseinrichtung 5 ist im Fahrzeug 20 integriert. Das entsprechende Sekundärteil 4 befindet sich innerhalb der Laufbahnvertiefung 22 im geringen Abstand zum Primärteil 3. Gegenüberliegend zum Sekundärteil 4 ist in der Laufbahnvertiefung 22 die Spannungsversorgungseinrichtung 9 mit Stromschiene 11 angeordnet. Mit dieser steht die vom Fahrzeug 20 vorstehende Schleifkontakteinrichtung 10 in Eingriff.

Zur Positionsbestimmung des Fahrzeugs ist eine entsprechende Positionsbestimmungseinrichtung 19 zwischen Fahrzeug 20 und Laufbahnvertiefung 22 vorgesehen. Diese kann sich wie die bereits in Fig. 1 beschriebene Positionsbestimmungseinrichtung 19 aus einer Maßstabseinrichtung 29 und einer Maßstabsableseeinrichtung 30 zusammensetzen. Es kann ebenfalls ein Bussystem 35 vorgesehen sein.

Eine entsprechende Positionsbestimmungseinrichtung 19 für die Grundplatte 7 selbst ist in Fig. 2 zur Vereinfachung nicht dargestellt.

Zur Abdeckung der Laufbahnvertiefung 22 ist eine Abdeckung 24 zwischen Abdeckprofil 14 und Unterseite 8 der Grundplatte 7 angeordnet, wobei diese Abdeckung 4 oben auf dem Abdeckprofil 14 aufliegt und beispielsweise an diesem lösbar befestigt ist.

Die Abdeckung 24 weist oberhalb des Fahrzeugs 20 einen Schlitz 25 auf, der sich in Bewegungsrichtung des Fahrzeugs 20 erstreckt. Durch diesen ist die Kopplungseinrichtung 23 in Richtung Grundplatte 7 hindurchgeführt.

Bei dem dargestellten Ausführungsbeispiel ist die Kopplungseinrichtung 23 durch einen automatisch in Richtungen 31 anheb- und absenkbaren Hubmagneten gebildet. Dieser ist vom Fahrzeug 20 in eine Vertiefung in der Unterseite 8 der Grundplatte 2 einschieb- bzw. aus dieser Vertiefung herausziehbar.

Es sei nochmals darauf hingewiesen, dass bei dem erfindungsgemäßen Transportsystem eine vertikale Führung der Produktträger 6 möglich ist, wie sie beispielsweise in der DE 29816285 desselben Anmelders beschrieben ist. Zur Anpassung des hier beschriebenen Transportsystems an eine solche vertikale Führung sind die in dem vorangehend genannten Gebrauchsmuster beschriebenen Merkmale entsprechend übertragbar.

## Patentansprüche

1. Transportsystem (1) mit zumindest einem entlang einer Laufbahn (2) mittels einer Primärteil (3) und Sekundärteil (4) aufweisenden Linearmotorantriebseinrichtung (5) bewegbaren Produktträger (6), welcher eine im wesentlichen ebene Grundplatte (7) zum Transport von Gegenständen aufweist, und der Grundplatte der Primärteil (3) und der Laufbahn (2) der Sekundärteil (4) zugeordnet ist, wobei der Produktträger (6) eine bordeigene Elektronik aufweist, die über eine als Spannungs- bzw. Stromschiene (11) ausgebildete Spannungsversorgungseinrichtung (9) mit einer Zentralstation zum Austausch von Daten und/oder Anweisungen in Verbindung steht, welche Spannungs- bzw. Stromschiene (11) entlang der Laufbahn (2) und insbesondere an dieser angeordnet verläuft und mit welcher der Produktträger (6) über eine Schleifkontakieinrichtung (10) in Kontakt ist, wobei über die Spannungs- bzw. Stromschiene (11) sowohl Energie auf den Produktträger (6) übertragen als auch Informationen mit der Zentralstation ausgetauscht werden.

2. Transportsystem nach Anspruch 1, **dadurch gekennzeichnet, dass** der Primärteil (3) an der Grundplatte (7), insbesondere an deren Unterseite (8), angeordnet ist.

3. Transportsystem nach Anspruch 1 oder 2, **dadurch gekennzeichnet, dass** der Primärteil (3) in der Grundplatte (7) zumindest teilweise versenkt angeordnet ist.

4. Transportsystem nach wenigstens einem der vorangehenden Ansprüche, **dadurch gekennzeichnet, dass** die Linearmotorantriebseinrichtung (5) ein Synchron- oder Asynchronmotor ist.

5. Transportsystem nach wenigstens einem der vorangehenden Ansprüche, **dadurch gekennzeichnet, dass** die Laufbahn (2) durch ein von einer Vielzahl von im wesentlichen vertikal auf einem Untergrund aufgestellten Tragprofilen (12) im Abstand zueinander gehaltenes Laufschienen-Paar (13) gebildet ist.

6. Transportsystem nach wenigstens einem der vorangehenden Ansprüche, **dadurch gekennzeichnet, dass** ein Abdeckprofil (14) zwischen den Tragprofilen (12) angeordnet ist.

7. Transportsystem nach wenigstens einem der vorangehenden Ansprüche, **dadurch gekennzeichnet, dass** das oder die Sekundärteile (4) am Abdeckprofil (14) entlang der Laufbahn (2) angeordnet sind.

8. Transportsystem nach wenigstens einem der vorangehenden Ansprüche, **dadurch gekennzeichnet, dass** die Grundplatte (7) entlang ihrer Längskanten (15, 16) und/oder auf ihrer Unterseite (8) benachbart zu ihren Längskanten (15, 16) entlang der Laufschienen (13) geführt ist.

9. Transportsystem nach wenigstens einem der vorangehenden Ansprüche, **dadurch gekennzeichnet, dass** zur Führung der Grundplatte (7) zwischen dieser und der Laufbahn (2) Roll-, Kugel-, Führungselemente, reibungsvermindernde Einrichtungen oder dergleichen angeordnet sind.

10. Transportsystem nach wenigstens einem der vorangehenden Ansprüche, **dadurch gekennzeichnet, dass** zwischen Produktträger (6) und Laufbahn (2) eine Positionsbestimmungseinrichtung (19) angeordnet ist.

11. Transportsystem nach wenigstens einem der vorangehenden Ansprüche, **dadurch gekennzeichnet, dass** am Produktträger (6) und gegenüberliegend insbesondere am Abdeckprofil (14) Busleitungen (35), wie Lichtwellenleiter oder dergleichen, zum Austausch von Daten- und/oder Anweisungen angeordnet sind.

12. Transportsystem nach wenigstens einem der vorangehenden Ansprüche, **dadurch gekennzeichnet, dass** der Produktträger (6) eine Anzeige- und/oder Abfrage- und/oder Eingabeeinrichtung aufweist.

13. Transportsystem nach wenigstens einem der vorangehenden Ansprüche, **dadurch gekennzeichnet, dass** das Primärteil (3) an einem mit der Grundplatte (7) koppelbaren Fahrzeug (20 angeordnet ist.

14. Transportsystem nach wenigstens einem der vorangehenden Ansprüche, **dadurch gekennzeichnet, dass** das Fahrzeug (20) entlang einer separaten, insbesondere unterhalb der Grundplatte (7) verlaufenden Fahrzeuglaufbahn (21) bewegbar ist.

15. Transportsystem nach wenigstens einem der vorangehenden Ansprüche, **dadurch gekennzeichnet, dass** die Fahrzeuglaufbahn (21) in dem Abdeckprofil (14) ausgebildet ist.

16. Transportsystem nach wenigstens einem der vorangehenden Ansprüche, **dadurch gekennzeichnet, dass** die Spannungsversorgungseinrichtung (9) entlang der Fahrzeuglaufbahn (21) am Abdeckprofil (14) angeordnet ist.

17. Transportsystem nach wenigstens einem der vorangehenden Ansprüche, **dadurch gekennzeichnet, dass** die Fahrzeuglaufbahn (21) als eines im wesentlichen U-förmige, nach oben in Richtung Grundplatte (7) offene Laufbahnvertiefung (22) im Abdeckprofil (14) ausgebildet ist.

18. Transportsystem nach wenigstens einem der vorangehenden Ansprüche, **dadurch gekennzeichnet, dass** zwischen Fahrzeug (20) und Grundplatte (7) eine lösbare Kopplungseinrichtung (23) angeordnet ist.

19. Transportsystem nach wenigstens einem der vorangehenden Ansprüche, **dadurch gekennzeichnet, dass** die Laufbahnvertiefung (22) durch eine Abdeckung (24) abdeckbar ist, in der ein sich in Bewegungsrichtung des Fahrzeugs (20) erstreckender Schlitz (25) zum Durchgriff der Kopplungseinrichtung (23) ausgebildet ist.

20. Transportsystem nach wenigstens einem der vorangehenden Ansprüche, **dadurch gekennzeichnet, dass** ein verstellbarer Drehteller (26) auf der Grundplatte (7) drehbar gelagert ist.

21. Transportsystem nach wenigstens einem der vorangehenden Ansprüche, **dadurch gekennzeichnet, dass** eine Lineardrehantriebseinrichtung (27) zur Verdrehung des Drehtellers (26) zwischen diesem und der Grundplatte (7) ausgebildet ist.

22. Transportsystem nach wenigstens einem der vorangehenden Ansprüche, **dadurch gekennzeichnet, dass** zumindest im Bereich von Arbeitsstationen entlang der Laufbahn (2) insbesondere an dieser eine Bremseinrichtung (28) für den Produktträger (6) angeordnet ist.

23. Transportsystem nach wenigstens einem der vorangehenden Ansprüche, **dadurch gekennzeichnet, dass** die Fahrzeuglaufbahn (21) wenigstens einen Rückführabschnitt zur Rückführung von von der Grundplatte (7) entkoppelten Fahrzeugen (20) an eine Rückführungsstelle aufweist.

## Claims

1. A transport system (1) including at least one product carrier (6) which is adapted to be moved along a slide way (2) by means of a linear motor drive unit (5) comprising a primary part (3) and a secondary part (4) and which is provided with a substantially flat base plate (7) for transporting objects, said base plate having associated therewith the primary part (3) and said slide way (2) having associated therewith the secondary part (4), wherein said product carrier (6) is provided with onboard electronics that communicate with a central station via a voltage supply unit (9), which is implemented as a conductor rail (11), so as to exchange data and/or instructions, said conductor rail (11) extending along the slide way (2) and being especially arranged on said slide way (2), and said product carrier (6) being in contact with said conductor rail (11) via a sliding contact means (10), and wherein a transmission of power to the product carrier (6) as well as an exchange of information with the central station take place via said conductor rail (11).

2. A transport system according to claim 1, **characterized in that** the primary part (3) is arranged on the base plate (7), especially on the lower surface (8) of said base plate.

3. A transport system according to claim 1 or 2, **characterized in that** the primary part (3) is arranged in the base plate (7) such that it is at least partially embedded therein.

4. A transport system according to at least one of the preceding claims, **characterized in that** the linear motor drive unit (5) is a synchronous motor or an asynchronous motor.

5. A transport system according to at least one of the preceding claims, **characterized in that** the slide way (2) is formed by a pair of slide rails (13) held in spaced relationship with one another by a plurality of support sections (12) set up substantially vertically on a foundation.

6. A transport system according to at least one of the preceding claims, **characterized in that** a cover section (14) is arranged between the support sections (12).

7. A transport system according to at least one of the preceding claims, **characterized in that** the secondary part (4) or the secondary parts (4) are arranged on the cover section (14) along the slide way (2).

8. A transport system according to at least one of the preceding claims, **characterized in that** the base plate (7) is guided along the slide rails (13) along its longitudinal edges (15, 16) and/or on its lower surface (8) adjacent said longitudinal edges (15, 16).

9. A transport system according to at least one of the preceding claims, **characterized in that**, for guiding the base plate (7), roller elements, spherical elements, guide elements, friction-reducing means or the like are arranged between said base plate (7) and the slide way (2).

10. A transport system according to at least one of the preceding claims, **characterized in that** a position determination unit (19) is arranged between the product carrier (6) and the slide way (2).

11. A transport system according to at least one of the preceding claims, **characterized in that** bus lines (35), such as optical waveguides or the like, are arranged on the product carrier (6) and, in opposed relationship therewith, especially on the cover section (14) so as to exchange data and/or instructions.

12. A transport system according to at least one of the preceding claims, **characterized in that** the product carrier (6) is provided with display and/or interrogation and/or input means.

13. A transport system according to at least one of the preceding claims, **characterized in that** the primary part (3) is arranged on a vehicle (20) which is adapted to be coupled to the base plate (7).

14. A transport system according to at least one of the preceding claims, **characterized in that** the vehicle (20) is adapted to be moved along a separate vehicle slide way (21) extending especially below the base plate (7).

15. A transport system according to at least one of the preceding claims, **characterized in that** the vehicle slide way (21) is formed in the cover section (14).

16. A transport system according to at least one of the preceding claims, **characterized in that** the voltage supply unit (9) is arranged along the vehicle slide way (21) on the cover section (14).

17. A transport system according to at least one of the preceding claims, **characterized in that** the vehicle slide way (21) is implemented in the cover section (14) as a substantially U-shaped slide-way groove (22) which is open at the top in the direction of the base plate (7).

18. A transport system according to at least one of the preceding claims, **characterized in that** a releasable coupling means (23) is arranged between the vehicle (20) and the base plate (7).

19. A transport system according to at least one of the preceding claims, **characterized in that** the slide-way groove (22) is adapted to be covered by a cover (24) having formed therein a slot (25) which extends in the direction of movement of the vehicle (20) and which permits the coupling means (23) to extend therethrough.

20. A transport system according to at least one of the preceding claims, **characterized in that** an adjustable rotary plate (26) is rotatably supported on the base plate (7).

21. A transport system according to at least one of the preceding claims, **characterized in that** a linear rotary drive unit (27) used for rotating the rotary plate (26) is implemented between said rotary plate (26) and the base plate (7).

22. A transport system according to at least one of the preceding claims, **characterized in that**, at least in the area of work stations along the slide way (2), a brake means (28) for the product carrier (6) is arranged in particular on said slide way (2).

23. A transport system according to at least one of the preceding claims, **characterized in that** the vehicle slide way (21) includes at least one return section for returning vehicles (20), which have been decoupled from the base plate (7), to a return location.

## Revendications

1. Système de transport comportant au moins un support de produit (6) déplaçable le long d'une voie de circulation (2) à l'aide d'un dispositif d'entraînement à moteur linéaire (5) comportant une partie primaire (3) et une partie secondaire (4), et qui possède une plaque de base essentiellement plane (7) pour le transport d'objets, et la partie primaire (3) est associée à la plaque de base et la partie secondaire (4) est associée à la voie de circulation (2), et dans lequel le support de produit (6) possède un système électronique installé à bord, qui est relié par l'intermédiaire d'un dispositif d'alimentation en tension (9) agencé sous la forme d'un rail de tension ou de courant (11), à un poste central pour l'échange de données et/ou d'indications, lequel rail de tension ou de courant (11) est disposé le long de la voie de circulation (2), et notamment sur cette dernière, et avec lequel le support de produit (6) est en contact au moyen d'un dispositif à contact glissant (10), au moyen du rail de tension ou de courant (11), aussi bien de l'énergie étant transmise au support de produit (6) que des informations étant échangées avec le poste central.

2. Système de transport selon la revendication 1, **caractérisé en ce que** la partie primaire (3) est disposée sur la plaque de base (7), notamment sur sa face inférieure (8).

3. Système de transport selon la revendication 1 ou 2, **caractérisé en ce que** la partie primaire (3) est disposée au moins en partie en renfoncement dans la plaque de base (7).

4. Système de transport selon au moins l'une des revendications précédentes, **caractérisé en ce que** le dispositif d'entraînement à moteur linéaire (5) est un moteur synchrone ou asynchrone.

5. Système de transport selon au moins l'une des revendications précédentes, **caractérisé en ce que** la voie de circulation (2) est formée par une paire de rails de déplacement (13), qui sont retenus à distance réciproque essentiellement verticalement par une multiplicité de profilés de support (12) montés sur une base.

6. Système de transport selon au moins l'une des revendications précédentes, **caractérisé en ce qu'**un profil de recouvrement (14) est disposé entre les profilés de support (12).

7. Système de transport selon au moins l'une des revendications précédentes, **caractérisé en ce que** le ou les parties secondaires (4) sont disposées sur le profil de recouvrement (14) le long de la voie de circulation (2).

8. Système de transport selon au moins l'une des revendications précédentes, **caractérisé en ce que** la plaque de base (7) est guidée le long de ses bords longitudinaux (15, 16) et/ou le long de son côté inférieur (8) au voisinage de ses bords longitudinaux (15, 16) le long des rails de circulation (13).

9. Système de transport selon au moins l'une des revendications précédentes, **caractérisé en ce que** pour le guidage de la plaque de base (7), des éléments de roulement, des éléments sphériques, des éléments de guidage, des dispositifs réduisant le frottement ou analogues sont disposés entre cette plaque de base et la voie de circulation (2).

10. Système de transport selon au moins l'une des revendications précédentes, **caractérisé en ce qu'**un dispositif de détermination de position (19) est disposé entre le support de produit (6) et la voie de circulation (2).

11. Système de transport selon au moins l'une des revendications précédentes, **caractérisé en ce que** sur le support de produit (6) et en vis-à-vis notamment sur le profil de recouvrement (14) sont disposés des lignes de bus (35), telles que des guides d'ondes lumineuses ou analogues, pour l'échange de données et/ou d'indications.

12. Système de transport selon au moins l'une des revendications précédentes, **caractérisé en ce que** le support de produit (6) comporte un dispositif d'affichage et/ou d'interrogation et/ou d'entrée.

13. Système de transport selon au moins l'une des revendications précédentes, **caractérisé en ce que** la partie primaire (3) est disposée sur un véhicule (20) pouvant être couplée à la plaque de base (7).

14. Système de transport selon au moins l'une des revendications précédentes, **caractérisé en ce que** le véhicule (20) est déplaçable le long d'une voie séparée de circulation de véhicule (21) qui s'étend notamment au-dessous de la plaque de base (7).

15. Système de transport selon au moins l'une des revendications précédentes, **caractérisé en ce que** la voie de circulation (21) du véhicule est formée dans le profilé de recouvrement (14).

16. Système de transport selon au moins l'une des revendications précédentes, **caractérisé en ce que** le dispositif d'alimentation en tension (9) est disposé le long de la voie de circulation (21) du véhicule, sur le profilé de recouvrement (14).

17. Système de transport selon au moins l'une des revendications précédentes, **caractérisé en ce** la voie de circulation (21) du véhicule est agencée sous la forme d'un renfoncement de voie de circulation (22) dans le profil de recouvrement (14), qui est essentiellement en forme de U et s'ouvre vers le haut en direction de la plaque de base (7).

18. Système de transport selon au moins l'une des revendications précédentes, **caractérisé en ce qu'**un dispositif de couplage amovible (23) est disposé entre le véhicule (20) et la plaque de base (16).

19. Système de transport selon au moins l'une des revendications précédentes, **caractérisé en ce que** le renfoncement (22) de la voie de circulation peut être recouvert par un élément de recouvrement (24), dans lequel est formé une fente (25) qui s'étend dans la direction de déplacement du véhicule automobile (20), pour traverser le dispositif de couplage (23).

20. Système de transport selon au moins l'une des revendications précédentes, **caractérisé en ce qu'**un plateau rotatif réglable (26) est monté de manière à pouvoir tourner sur la plaque de base (7).

21. Système de transport selon au moins l'une des revendications précédentes, **caractérisé en ce qu'**un dispositif d'entraînement linéaire et rotatif (27) servant à entraîner en rotation le plateau rotatif (26) est formé entre ce dernier et la plaque de base (7).

22. Système de transport selon au moins l'une des revendications précédentes, **caractérisé en ce qu'**au moins dans la zone de postes de travail le long de la voie de circulation (2) est disposé notamment sur cette voie, un dispositif de freinage (28) pour le support de produit (6).

23. Système de transport selon au moins l'une des revendications précédentes, **caractérisé en ce que** la voie de circulation (21) du véhicule comporte au moins une section de retour pour le renvoi de véhicules (20) découplé de la plaque de base (7), à un poste de renvoi.
